# EUROPÄISCHE PATENTSCHRIFT

(11) **EP 4 202 585 B1**
(45) Veröffentlichungstag und Bekanntmachung des Hinweises auf die Patenterteilung: **03.12.2025**
(21) Anmeldenummer: 22214880.1
(22) Anmeldetag: 20.12.2022
(51) Int. Cl.: G05B 23/02, H04N 17/00

(54) **PRÜFAUFBAU UND VERFAHREN ZUM TESTEN EINES STEUERGERÄTES**
TEST SETUP AND METHOD FOR TESTING A CONTROL DEVICE
STRUCTURE DE TEST ET PROCÉDÉ DE TEST D'UN APPAREIL DE COMMANDE

(30) Priorität: 21.12.2021 DE 102021133971
(43) Veröffentlichungstag der Anmeldung: 28.06.2023
(73) Patentinhaber: dSPACE GmbH, 33102 Paderborn (DE)
(72) Erfinder: Sauer, Jochen, 33102 Paderborn (DE); Seiger, Caius, 33102 Paderborn (DE)

(56) Entgegenhaltungen:
- CN-A- 109 874 007
- DE-U1- 202015 104 345
- REWAY FABIO ET AL: "Test Methodology for Vision-Based ADAS Algorithms with an Automotive Camera-in-the-Loop", 2018 IEEE INTERNATIONAL CONFERENCE ON VEHICULAR ELECTRONICS AND SAFETY (ICVES), IEEE, 12 September 2018 (2018-09-12), pages 1 - 7, XP033439393, DOI: 10.1109/ICVES.2018.8519598

## Beschreibung

Die Anmeldung betrifft einen Prüfaufbau und ein Verfahren zum Testen eines Steuergerätes für ein Fahrzeug.

Steuergeräte in Kraftfahrzeugen können eine Recheneinheit, Speicher, Schnittstellen und evtl. weitere Komponenten, aufweisen, die für die Verarbeitung von Eingangssignalen mit Eingangsdaten in das Steuergerät und die Erzeugung von Steuersignalen mit Ausgangsdaten erforderlich sind. Die Schnittstellen dienen zur Aufnahme der Eingangssignale bzw. Abgabe der Steuersignale.

Steuergeräte für Fahrfunktionen bei fortgeschrittenen Fahrerassistenzsystemen (ADAS = Advanced Driver Assistance Systems), z. B. für autonomes oder teilautonomes Fahren, können als Eingangsdaten Bilddaten einer Kameraeinheit erhalten. In einer Kameraeinheit sorgt eine Kameraoptik als optisches System dafür, dass eine optische Abbildung der Umwelt erzeugt wird. Eine Linse und ein KameraChip, auch Imager genannt, können Teil einer solchen Kameraoptik sein. Eine Kameraoptik kann auch mehr als eine Linse und/oder weitere optische Elemente aufweisen.

Eine Möglichkeit zum Test von Steuergeräten, die Bilddaten einer Kameraeinheit auswerten, besteht darin, die Steuergeräte mit den entsprechenden Kameraeinheiten im Einbauzustand - beispielsweise im Kraftfahrzeug im Rahmen von Testfahrten - zu erproben. Dies ist aufwendig, kostenintensiv und es können viele Situationen in einer echten Umgebung nicht überprüft werden, da sie nur in Extremfällen, beispielsweise bei Unfällen, auftreten. Deshalb werden entsprechende Steuergeräte in künstlichen Umgebungen, beispielsweise in Prüfständen, getestet. Ein häufiges Testszenario besteht hier darin, die Funktionalität eines Steuergeräts mittels einer simulierten Umwelt, also auf Grundlage eines virtuellen räumlichen Umgebungsmodells, zu testen. Dazu wird die Umwelt des Steuergerätes in Teilen oder auch vollständig mittels einer leistungsfähigen Simulationsumgebung in Echtzeit berechnet. Häufig nimmt die Simulationsumgebung die von dem Steuergerät dann generierten Ausgangssignale auf und lässt diese in eine weitere Echtzeitsimulation einfließen. Steuergeräte können so gefahrlos in einer simulierten Umgebung unter praktisch echten Bedingungen getestet werden. Wie realitätsnah der Test ist, hängt von der Güte der Simulationsumgebung und der darauf berechneten Simulation ab. Steuergeräte können so also im geschlossenen Regelkreis getestet werden, weshalb derartige Testszenarien auch als Hardware-in-the-Loop-Tests (Hardware in-the-Loop: HiL) bezeichnet werden. Andere Arten von relevanten Testszenarien sind Software-in-the-Loop-Tests (Software-in-the-Loop: SiL), bei denen eine zu testende Software auf einer virtuellen Hardware - zum Beispiel auf einem virtuellen Steuergerät - ausgeführt wird und so getestet werden kann, oder Model-in-the-Loop-Tests (Model-in-the-Loop: MiL), die der Modellüberprüfung dienen, also von mathematischen Modellen technisch-physikalischer Systeme. Die Simulationsumgebung kann dabei synthetische Bilddaten generieren, die die virtuelle Umwelt des Steuergerätes nachbilden.

Eine weitere Möglichkeit zum Testen von Steuergeräten besteht darin, anstelle synthetischer, auf Basis einer simulierten Umwelt erzeugter Bilddaten aufgezeichnete Bilddaten zu verwenden. Hierbei werden Bilddaten, die während einer realen Testfahrt von einer realen Kamera des Testfahrzeugs erzeugt und mittels eines Datenrekorders aufgezeichnet wurden, einem Steuergerät zugeführt, um die Reaktion des Steuergeräts auf die aufgezeichneten Bilddaten zu testen. Diese Technik ist auch als "Data Replay" bekannt.

In CN111399480A wird ein Hardware-in-the-Loop Prüfaufbau beschrieben, der virtuelle Sensoren anwendet, um das zu testende Steuergerät mit synthetischen Bilddaten zu versorgen. Der Prüfaufbau weist eine Fehlereinspeisungseinheit auf, die das Steuergerät wahlweise auf virtueller oder physischer Ebene mit Sensorfehlern versorgt, um die Reaktion des Steuergerätes auf einen fehlerhaften Sensor zu testen.

In REWAY FABIO ET AL: "Test Methodology for Vision-Based ADAS Algorithms with an Automotive Camera-in-the-Loop", 2018 IEEE INTERNATIONAL CONFERENCE ON VEHICU-LAR ELECTRONICS AND SAFETY (ICVES), IEEE, 12. September 2018 wird ein Prüfaufbau für ein fortgeschrittenes Fahrerassistenzsystem (ADAS) beschrieben, bei dem auf Bildschirmen Umgebungsszenarien dargestellt werden, welche von Kameras des Fahrerassistenzsystems erfasst werden. Es ist möglich, unerwünschte Linseneffekte in den auf den Bildschirmen dargestellten Umgebungsszenarien zu reproduzieren.

In CN109874007A wird ein Gerät zur Fehlereinspeisung beschrieben, bei dem in ein Kameravideosignal ein Fehlersignal eingespeist wird und das resultierende Signal an ein zu testende Steuergerät ausgegeben wird.

In DE202015104345U1 wird ein Adapter beschrieben, der anstelle eines Kamerasensors mit einem Steuergerät verbunden werden kann, wobei der Adapter dazu eingerichtet ist, Bilddaten von einer Grafikkarte zu empfangen und die Bilddaten dem Steuergerät zuzuführen. Die Grafikkarte ist eingerichtet, defekte Pixel eines Bildwandelsensors zu simulieren.

Der Anmeldung liegt die Aufgabe zugrunde, die Fehlereinspeisung für den Steuergerätetest weiter zu verbessern.

Die Aufgabe wird durch einen Prüfaufbau mit den Merkmalen des Patentanspruchs 1 bzw. durch ein Verfahren mit den Merkmalen des unabhängigen Patentanspruchs 10 gelöst. In den abhängigen Ansprüchen sind vorteilhafte Aus- und Weiterbildungen angegeben.

Ein zu testendes Steuergerät, z. B. für ein Kraftfahrzeug, ist eingerichtet, von einer Kameraeinheit ausgegebene Kamera-Bilddaten zu empfangen. Ein Prüfaufbau zum Testen eines solchen Steuergerätes weist einen Prozessor und eine Bildausgabeeinheit auf, wobei der Prozessor eingerichtet ist, Bilddaten in Form eines mittels einer Kameraoptik erfassbaren Bildes auf der Bildausgabeeinheit auszugeben. Die Kameraeinheit ist ausgebildet und angeordnet, die ausgegebenen Bilddaten mittels einer Kameraoptik zu erfassen. Die Kameraoptik ist Bestandteil der Kameraeinheit. Die Kameraeinheit selbst kann bei dieser Art der Testung selbst völlig funktionsfähig sein. Die Fehler werden über den Prozessor erzeugt und befinden sich dann innerhalb der Bilddaten, die auf der Bildausgabeeinheit ausgegeben werden und von der Kameraeinheit optisch erfasst werden.

Der Prozessor des Prüfaufbaus ist eingerichtet, die auf der Bildausgabeeinheit ausgegebenen synthetischen Bilddaten derart zu manipulieren, dass die von der Kameraeinheit ausgegebenen Kamera-Bilddaten einen Fehler der Kameraeinheit simulieren. Die Bilddaten können vom Prozessor erzeugte synthetische Bilddaten sein, die insbesondere durch Rendering einer simulierten Umwelt erzeugt werden. In diesem Fall können die Fehler unmittelbar beim Rendering in die Bilddaten eingebaut werden. Die Bilddaten können auch aufgezeichnete Bilddaten sein, die nativ keine Fehler umfassen und von dem Prozessor nachträglich manipuliert werden.

Die Bildausgabeeinheit ist dabei insbesondere ein Bildschirm oder Monitor, auf dem optische und damit visuell wahrnehmbare Informationen dargestellt werden können. Die Ausgabe der Bilddaten kann dabei einem Rendern von digitalen Bilddaten auf dem Monitor entsprechen. Die Kameraoptik der Kameraeinheit ist eingerichtet, solche optischen Informationen zu erfassen und auf ein Abbild, insbesondere in Form von digitalen Bilddaten, abzubilden. Die Kameraoptik umfasst dabei den Bereich von der ersten Linse der Kameraeinheit bis zum Imager und optional bis zu einem dem Imager nachgeschalteten Kamera-Prozessor zur Verarbeitung der vom Imager ausgegebenen Rohdaten. Der Kamera-Prozessor kann dabei optional zur Ausführung von z. B. einem neuronalen Netz vorgesehen sein, das z. B. zur Objekterkennung dienen kann. Der Kamera-Prozessor kann dabei optional Bestandteil der Kameraeinheit sein oder alternativ der Kameraeinheit nachgeschaltet sein.

Die Kameraeinheit steht über die von ihr ausgebbaren Kamera-Bilddaten in Verbindung mit dem Steuergerät, welches eingerichtet und ausgebildet ist, die Kamera-Bilddaten als Eingangsdaten aufzunehmen und weiterzuverarbeiten.

Der Prozessor des Prüfaufbaus ist ausgebildet und eingerichtet, die synthetischen Bilddaten zu erzeugen und auf der Bildausgabeeinheit auszugeben. Synthetische Bilddaten sind Bilddaten, die synthetisch, d. h. durch Rechenoperationen des Prozessors erzeugt wurden, insbesondere anhand eines virtuellen Modells der Kameraeinheit und/oder des Simulationsmodells einer virtuellen Umgebung des Steuergerätes. Das virtuelle Modell der Kameraeinheit soll dabei die reale Kameraeinheit möglichst genau und präzise nachbilden. Der Prozessor kann sich zur Erzeugung der synthetischen Bilddaten insbesondere auch auf Eingangsdaten von anderen Recheneinheiten stützen, die er über eine Eingangsschnittstelle erhält.

Der Prüfaufbau ermöglicht, einen Fehler der Kameraeinheit dadurch zu simulieren, dass der Prozessor die synthetischen Bilddaten so manipuliert, dass die von der Kameraeinheit, die die Bilddaten optisch erfasst, ausgegebenen Kamera-Bilddaten so aussehen, als würde die Kameraeinheit einen Fehler aufweisen.

Dies ermöglicht einen umfangreichen Test des Steuergerätes als Reaktion auf verschiedene Fehler der Kameraeinheit. Insbesondere können gewünschte zu testende Fehler über eine vorsehbare Fehlereinspeisungsschnittstelle des Prozessors in den Prüfaufbau eingespeist werden. In Abhängigkeit von dem eingespeisten gewünschten zu simulierenden Fehler kann der Prozessor wiederum die synthetischen Bilddaten gezielt manipulieren, so dass die von der Kameraeinheit ausgegebenen Kamera-Bilddaten so aussehen, als hätte die Kameraeinheit den über die Fehlereinspeisungsschnittstelle in den Prüfaufbau eingespeisten Fehler. Es können Testfälle z. B. anhand eines Testkataloges ausgewählt und eingespeist werden. Die Reaktion des Steuergerätes kann erfasst und ausgewertet werden.

Im Zusammenhang mit dieser Anmeldung kann unter Steuergerät ein reales Steuergerät mit einer realen Steuergeräte-Recheneinheit verstanden werden, die von der Kameraeinheit Kamera-Bilddaten empfangen kann. Dies ist der HiL-Fall. Alternativ oder zusätzlich kann unter Steuergerät eine reale Software verstanden werden, die auf einem virtuellen Steuergerät abläuft und die Kamera-Bilddaten von der Kameraeinheit empfängt. Dies ist der SiL-Fall. Der Prüfstand ist auf beide Fälle anwendbar. In gleicher Weise ist der Prüfstand für MiL-Fälle anwendbar.

Erfindungsgemäß ist der Fehler, der simuliert wird, ein elektrischer Fehler der Kameraeinheit.

Elektrische Fehler betreffen einen Ausfall oder eine Fehlfunktion einer Signalleitung. Elektrische Fehler sind z. B. Fehler, die durch Fehler in elektrischen Verbindungen der Kameraeinheit hervorgerufen werden, z. B. durch Unterbrechung von elektrischen Verbindungen und/oder durch Herstellen von ungewollten und nicht-vorgesehenen elektrischen Verbindungen. Elektrische Fehler können in diesem Zusammenhang insbesondere ein Ausfall der Kameraeinheit, ein Kurzschluss, ein Erdungsfehler, ein Kurzschluss zwischen Pins der Kameraeinheit und/oder ein Leiter- oder Kabelbruch sein.

Der Vorteil bei der Simulation elektrischer Fehler ist, dass solche elektrischen Fehler simuliert werden können, ohne eine separate Einheit vorzusehen, die solche Fehler wirklich physikalisch hervorruft. Die Einspeisung von elektrischen Fehlern kann auf virtuellem Wege erfolgen, was hilft, Kosten zu senken und die Flexibilität zu erhöhen.

In einer Ausführungsform weist die Kameraeinheit eine Linse und einen Imager auf. Die Linse und der Imager sind Bestandteil der Kameraoptik, welche ein optisches System darstellt, das eine optische Abbildung der Umwelt erzeugt. Die von dem Imager ausgegebenen Rohdaten geben die optische Abbildung der Umwelt in Form von unverarbeiteten digitalen Bilddaten wieder. In dieser Ausführungsform enthalten die von der Kameraeinheit ausgegebenen Kamera-Bilddaten vom Imager ausgegebene Rohdaten. Die ausgegebenen Kamera-Bilddaten können so aussehen, als ob die Kameraeinheit einen Fehler hätte. Über die ausgegebenen Kamera-Bilddaten kann also ein Fehler der Kameraeinheit simuliert werden.

In einer Ausführungsform weist die Kameraeinheit eine Linse, einen Imager und einen Kamera-Prozessor zur Verarbeitung der vom Imager ausgegebenen Rohdaten auf. Die Linse und der Imager sind Bestandteil der Kameraoptik. Den vom Imager ausgegebenen Rohdaten ist oft ein Prozessor z. B. als Objekterkennung und/oder zur Erzeugung von Steuerbefehlen in Reaktion auf die Erkennung von Objekten nachgeschaltet. Diese Nachbearbeitung der Rohdaten kann z. B. in Form eines neuronalen Netzes, z. B. in Form eines Klassifikators, z. B. als Objekterkennung, erfolgen. Der Kamera-Prozessor kann zur Implementierung des neuronalen Netzes und Ausführung der Rechenoperationen des neuronalen Netzes vorgesehenen sein. In dieser Ausführungsform enthalten die von der Kameraeinheit ausgegebenen Kamera-Bilddaten vom Kamera-Prozessor verarbeitete und ausgegebene Bilddaten. Die ausgegebenen Kamera-Bilddaten können so aussehen, als ob die Kameraeinheit einen Fehler hätte. Über die ausgegebenen Kamera-Bilddaten kann also ein Fehler der Kameraeinheit simuliert werden. Die Kameraeinheit gemäß dieses Ausführungsbeispiels kann z. B. als integrierte Kameraeinheit, insbesondere als auf einem Chip integrierte System-on-Chip (SoC) Kameraeinheit vorliegen. Die vorgeschlagene Fehlereinspeisung über die Bildausgabeeinheit, deren Bildausgabe von der Kameraoptik erfasst wird, ist für eine solche SoC Kameraeinheit besonders vorteilhaft, da Fehler der Kameraeinheit simuliert werden können, ohne den Chip zu verändern. In vielen Fällen liegt ein solcher Zugang zum Chip und die Möglichkeit zu seiner Veränderung auch gar nicht vor.

In einer Ausführungsform des Prüfaufbaus betrifft der Fehler den Ausfall zumindest eines Farbkanals. Insbesondere kann z. B. der Bruch eines der RGB-Farbsignalkabel dadurch simuliert werden, dass die jeweilige durch Kabelbruch betroffene Farbe aus den auf der Bildausgabeeinheit dargestellten Bilddaten entfernt wird. Die Kameraeinheit nimmt dann die Bilddaten über ihre Kameraoptik auf und gibt ihrerseits Kamera-Bilddaten aus, die die jeweilige betroffene Farbe nicht enthalten. Hierdurch wird der Fehler simuliert, ohne dass ein solches Kabel real physikalisch wirklich unterbrochen werden muss.

Ein elektrischer Fehler kann auch einzelne Pixel oder Pixelbereiche des Imagers betreffen, die dann entsprechend ausfallen. Die Fehlersimulation stellt dann auf der Bildausgabeeinheit entsprechend die Bilddaten ohne diesen Pixel oder die Pixelbereiche dar, so dass der entsprechende Fehler in den Kamera-Bilddaten simuliert wird. Pixelfehler können neben einzelnen Pixeln auch die ganze Fläche des Imagers, einen Teilbereich des Imagers, z. B. 25%, aber auch einzelne oder mehrere Bildzeilen betreffen. Hiermit können Ausfälle und/oder Teilausfälle des Imagers simuliert werden.

Bei dieser Ausführungsform ist es insbesondere vorteilhaft, wenn die Auflösung der Bildausgabeeinheit größer ist als die des Imagers, um die Simulation von Ausfällen einzelner, ausgewählter Pixel zu ermöglichen. Insbesondere sollte die Kameraeinheit in Relation zur Bildausgabeeinheit eine Position aufweisen, die wohldefiniert und justiert ist. Dies ist nötig, um Pixelbereiche auf der Bildausgabeeinheit zumindest näherungsweise den Pixeln des Imagers zuweisen zu können.

Alternativ oder zusätzlich kann der Fehler zumindest einen Linsenfehler betreffen. Ein Linsenfehler kann auch eine Beschädigung oder Verschmutzung der Linse, Risse in der Linse und/oder Schmutzflecken auf der Linse betreffen. Diese Linsenfehler können auch auf der Bildausgabeeinheit wiedergegeben werden, insbesondere unter Einbeziehung von Unschärfe und/oder Streueffekten.

Erfindungsgemäß ist der Prozessor eingerichtet, synthetische Bilddaten zu erzeugen, die vorgegebene Fehler der Kameraeinheit simulieren. Durch das Vorgeben von bestimmten Fehlern kann die Fehlereinspeisung systematisiert werden und es können z. B. verschiedene Testmuster generiert werden, die dann auf verschiedene Varianten von Steuergeräten oder auf verschiedene virtuelle Umgebungen des Steuergerätes in ähnlicher Weise angewendet werden können.

In einer Ausführungsform des Prüfaufbaus sind die vorgegebenen Fehler in einer Datenbank abgelegt, mit der der Prozessor über eine Kommunikationsschnittstelle verbunden ist. Die vorgegebenen Fehler sind hier z. B. in einer Fehlerdatenbank abgelegt, die mit dem Prozessor z. B. über ein Kommunikationsnetzwerk verbunden sein kann.

In einer Ausführungsform ist vorgesehen, dass eine übergeordnete Intelligenz mit dem Prozessor des Prüfaufbaus kommuniziert. Die Kommunikation ist über die Kommunikationsschnittstelle vorgesehen, die insbesondere als Netzwerk ausgebildet sein kann. Die übergeordnete Intelligenz ist eingerichtet und vorgesehen, die Simulation der Fehler zu steuern, indem sie z. B. anhand von Fehlermodellen gezielt Abfolgen von vorgegebenen Fehlern aus der Fehlerdatenbank ausliest und in den Prüfaufbau einspeist. Dies ermöglicht eine weitere Systematisierung der Testung. Insbesondere kann vorgesehen sein, dass die übergeordnete Intelligenz die Tests automatisiert ausführt.

Das erfindungsgemäße Verfahren zum Testen eines Steuergeräts weist die Schritte gemäß Anspruch 10 auf.

Die synthetischen Bilddaten sind derart ausgestaltet, dass die von der Kameraeinheit ausgegebenen Kamera-Bilddaten einen Fehler der Kameraeinheit simulieren.

Das Verfahren ist insbesondere geeignet auf dem zuvor beschriebenen Prüfaufbau mit Prozessor und Bildausgabeeinheit im Zusammenspiel mit der zuvor beschriebenen Kameraeinheit und dem zuvor beschriebenen Steuergerät ausgeführt zu werden.

In einer Ausführungsform des Verfahrens wird die Reaktion des Steuergerätes auf den simulierten Fehler der Kameraeinheit erfasst und an eine übergeordnete Instanz übermittelt. Die übergeordnete Instanz kann der zuvor beschriebenen übergeordneten Intelligenz entsprechen, die mit dem Prüfaufbau z. B. über eine Kommunikationsschnittstelle verbunden ist.

Im Folgenden wird die Anmeldung anhand von in den Figuren dargestellter Ausführungsbeispiele weiter erläutert und beschrieben.
Fig. 1 zeigt schematisch einen Prüfaufbau zum Testen des Steuergerätes mit einer Kameraeinheit und dem Steuergerät,
Fig. 2 zeigt schematisch ein Verfahren zum Testen des Steuergerätes.

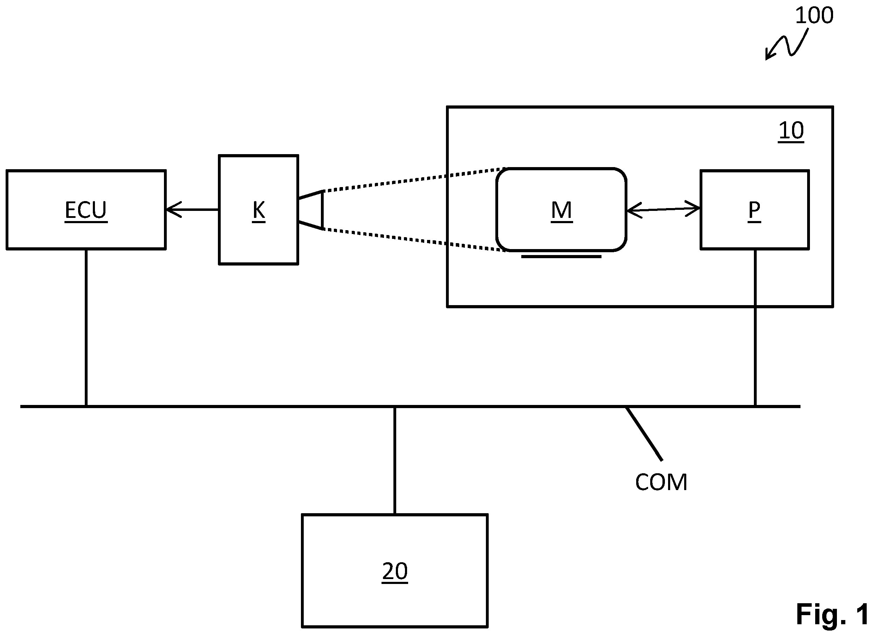

In Fig. 1 ist ein Prüfstand 100 mit einem Prüfaufbau 10 zum Testen eines Steuergerätes ECU dargestellt.

Das Steuergerät ECU soll im Prüfstand 100 getestet werden. Seine Funktionalität soll mittels einer simulierten Umwelt, also mittels einer virtuellen räumlichen Umgebung getestet werden. Dazu wird die Umwelt des Steuergerätes ECU in Teilen oder auch vollständig mittels einer leistungsfähigen Simulationsumgebung, welche z. B. in der übergeordneten Intelligenz 20 angeordnet sein kann, in Echtzeit berechnet. Häufig nimmt die Simulationsumgebung, die von dem Steuergerät ECU dann generierten Ausgangssignale auf und lässt diese in eine weitere Echtzeitsimulation einfließen. Ein solcher Prüfstand 100 erschafft für das Steuergerät ECU eine virtuelle Umgebung durch die Simulation der Umwelt durch physikalische Modelle und arbeitet hierbei mit Regelkreisen. Die physikalischen Modelle der virtuellen Umgebung reagieren auf die ausgegebenen Signale des zu prüfenden Steuergerätes ECU ähnlich der realen Umwelt. Hierdurch lassen sich die Regelkreise, deren Teil das Steuergerät ECU ist, auf ordnungsgemäße Funktion überprüfen.

Im in Fig. 1 dargestellten Ausführungsbeispiel sind die Regelkreise über die Kommunikationsschnittstelle COM realisiert. Die Kommunikationsschnittstelle kann z. B. drahtlos oder drahtgebunden, z. B. in Form eines Datenbusses ausgebildet sein.

Im dargestellten Ausführungsbeispiel soll das Steuergerät ECU mit einer realen Kameraeinheit K getestet werden. Die Kameraeinheit K liegt also real vor. Das Steuergerät ECU empfängt als Eingangsdaten Kamera-Bilddaten der Kameraeinheit K. Die Kameraeinheit K weist eine Kameraoptik auf, über die sie ein optisches Abbild ihrer Umgebung erzeugen kann. Die Kameraoptik der Kameraeinheit K weist zumindest eine Linse und einen Kamerachip, Imager genannt, auf. Der Imager erzeugt als Ausgabedaten Rohdaten als digitale Bilddaten.

In einer Ausführungsform weist die Kameraeinheit K die Kameraoptik mit Linse und Imager auf und gibt Rohdaten als Kamera-Bilddaten an das Steuergerät ECU aus. In einer solchen Ausführungsform verfügt das Steuergerät ECU bevorzugt über die Möglichkeit, die Rohdaten weiter zu verarbeiten, also z. B. eine Objekterkennung durchzuführen und Steuerbefehle auf Basis der Objekterkennung zu erzeugen.

In einer anderen Ausführungsform kann die Kameraeinheit K optional einen Kamera-Prozessor aufweisen, der die Rohdaten vom Imager empfängt und weiterverarbeitet. Die Weiterverarbeitung durch den Kamera-Prozessor kann weitere Verarbeitungsschritte aufweisen. Z. B. kann der Kamera-Prozessor die Rohdaten mittels eines Algorithmus weiterverarbeiten, der eine Objekterkennung auf Grundlage der Rohdaten durchführt. Hierfür kann maschinelles Lernen, z. B. Deep Learning, zum Einsatz kommen. Insbesondere kann der Kamera-Prozessor auf Grundlage der Objekterkennung optional auch Steuerbefehle für das Steuergerät ECU erzeugen. Der Kamera-Prozessor ist optionaler Bestandteil der Kameraeinheit K, wie es beispielsweise bei Kameraeinheiten K in der System-on-Chip Bauweise realisiert sein kann. In der System-on-Chip (SoC) Bauweise können elektrische Leitungen und andere Komponenten der Kameraeinheit K auf einem Chip in einem geschlossenen System verbaut sein. Ein Zugang zu einzelnen Leitungen, um z. B. dort einen Fehler zu simulieren ist dort nicht mehr möglich.

In dieser Ausführungsform mit einem Kamera-Prozessor als Bestandteil der Kameraeinheit, gibt der Kamera-Prozessor die von ihm verarbeiteten Bilddaten als Kamera-Bilddaten an das Steuergerät zur weiteren Verarbeitung aus. In diesem Ausführungsbeispiel können die Kamera-Bilddaten also auch Informationen zu erkannten Objekten und/oder Steuerbefehle enthalten.

Der Prüfaufbau 10 umfasst einen Prozessor P und eine Bildausgabeeinheit M, z. B. in Gestalt eines Bildschirms oder Monitors. Der Prozessor P des Prüfaufbaus 10 ist ausgebildet und eingerichtet, synthetische Bilddaten zu erzeugen und auf der Bildausgabeeinheit M auszugeben. Die synthetischen Bilddaten sind Bestandteil der virtuellen Umgebung des Steuergerätes ECU. Die vom Prozessor erzeugten synthetischen Bilddaten erscheinen z. B. als videofilmartige Sequenzen auf der Bildausgabeeinheit. Die Kameraeinheit K ist so auf die Bildausgabeeinheit ausgerichtet und justiert, dass sie die Bilddaten, die auf ihr angezeigt werden mit ihrer Kameraoptik erfassen kann. Das Steuergerät ECU ist über die Kameraeinheit K in der Lage, die videofilmartigen Sequenzen und die auf ihnen dargestellte virtuelle Umgebung zu erfassen und entsprechend zu reagieren. Die Ausgangsdaten des Steuergerätes ECU lassen sich analysieren, um zu überprüfen, ob das Steuergerät wunschgemäß auf die auf der Bildausgabeeinheit M ausgegebene Videosequenz reagiert. Die Reaktion des Steuergerätes ECU lässt sich dann wiederum in das physikalische Modell der virtuellen Umgebung einspeisen. Dies kann wiederum die synthetischen Bilddaten auf der Bildausgabeeinheit M beeinflussen. So lässt sich der oben erwähnte Regelkreis schließen.

Es ist nun erwünscht, auch Fehler der Kameraeinheit K simulieren zu können, um die Reaktion des Steuergerätes ECU auf solche Fehler testen zu können. Hierfür ist der Prozessor P eingerichtet, die von ihm erzeugten und auf der Bildausgabeeinheit M ausgegebenen synthetischen Bilddaten derart zu manipulieren, dass die Kameraeinheit K Kamera-Bilddaten ausgibt, die einen Fehler der Kameraeinheit K simulieren. Die von der Kameraeinheit K ausgegebenen Kamera-Bilddaten sind wiederum auf Basis von den auf der Bildausgabeeinheit M ausgegebenen synthetischen Bilddaten erzeugt worden. Zur Fehlersimulation kann die Kameraeinheit K also fehlerfrei weiterarbeiten. An ihr muss nicht manipuliert werden, insbesondere ist zur Erzeugung elektrischer Fehler kein Zugang zu elektrischen Leitungen der Kameraeinheit nötig. Dies ist insbesondere von Vorteil bei integrierten Kameraeinheiten, z. B. solchen in System-on-Chip Bauweise.

Fehler der Kameraeinheit K, die simuliert werden, können insbesondere einen elektrischen Fehler der Kameraeinheit K betreffen. Elektrische Fehler betreffen einen Ausfall oder eine Fehlfunktion einer Signalleitung. Elektrische Fehler sind z. B. Fehler, die durch Fehler in elektrischen Verbindungen der Kameraeinheit K hervorgerufen werden, z. B. durch Unterbrechung von elektrischen Verbindungen und/oder durch Herstellen von ungewollten und nicht-vorgesehenen elektrische Verbindungen. Elektrische Fehler können in diesem Zusammenhang insbesondere ein Ausfall der Kameraeinheit K, ein Kurzschluss, ein Erdungsfehler, ein Kurzschluss zwischen Pins der Kameraeinheit K und/oder ein Leiter- oder Kabelbruch sein.

Ein elektrischer Fehler der Kameraeinheit K kann insbesondere auch den Ausfall zumindest eines Farbkanals betreffen. Insbesondere kann z. B. der Bruch eines der RGB-Farbsignalkabel dadurch simuliert werden, dass die jeweilige durch Kabelbruch betroffene Farbe aus den auf der Bildausgabeeinheit M dargestellten Bilddaten entfernt wird. Die Kameraeinheit K nimmt dann die Bilddaten über ihre Kameraoptik auf und gibt ihrerseits Kamera-Bilddaten aus, die die jeweilige betroffene Farbe nicht enthalten. Hierdurch wird der Fehler simuliert, ohne dass ein solches Kabel real physikalisch wirklich unterbrochen werden muss.

Ein elektrischer Fehler kann auch einzelne Pixel oder Pixelbereiche des Imagers betreffen, die dann entsprechend ausfallen. Die Fehlersimulation stellt dann auf der Bildausgabeeinheit entsprechend die Bilddaten ohne diesen Pixel oder die Pixelbereiche dar, so dass der entsprechende Fehler in den Kamera-Bilddaten simuliert wird. Pixelfehler können neben einzelnen Pixeln auch die ganze Fläche des Imagers, einen Teilbereich des Imagers, z. B. 25%, aber auch Streifen betreffen. Hiermit können Ausfälle und/oder Teilausfälle des Imagers simuliert werden. Für die Simulation von solchen Fehlern ist es besonders vorteilhaft, wenn die Auflösung der Bildausgabeeinheit größer ist als die des Imagers, damit die Fehler von Pixeln auch mit ausreichender Auflösung dargestellt werden können. Insbesondere sollte die Kameraeinheit in Relation zur Bildausgabeeinheit eine Position aufweisen, die wohldefiniert und justiert ist. Dies ist nötig, um Pixel Bereiche auf der Bildausgabeeinheit zumindest näherungsweise den Pixeln des Imagers zuweisen zu können.

Alternativ oder zusätzlich kann ein Linsenfehler simuliert werden. Ein Linsenfehler kann z.B. eine Beschädigung oder Verschmutzung der Linse, Risse in der Linse und/oder Schmutzflecken auf der Linse betreffen. Diese Linsenfehler können auch auf der Bildausgabeeinheit wiedergegeben werden, insbesondere unter Einbeziehung von Unschärfe und/oder Streueffekten. Durch Auslegung des Prüfaufbaus in Kombination mit der Kameraeinheit K und dem Steuergerät ECU können auch solche Fehler simuliert werden.

Ein solcher Prüfstand 100 ermöglicht z. B. die Simulation eines Steuergerätes ECU für das autonome Fahren und/oder das teilautonome Fahren. Hierfür können Trajektorien des betroffenen Fahrzeuges und seiner Mitfahrzeuge z. B. in der übergeordneten Intelligenz 20 als Teil der virtuellen Umgebung berechnet werden. Die Bilder, die die Kameraeinheit K des Steuergerätes ECU in dieser virtuellen Umgebung "sehen" also aufnehmen würde, werden als synthetische Bilddaten an den Prozessor P des Prüfaufbaus 10 z. B. über die Kommunikationsschnittstelle COM übertragen. Auf Basis dieser synthetischen Bilddaten berechnet der Prozessor P dann synthetische Bilddaten zur Anzeige auf der Bildausgabeeinheit M, die Fehler der Kameraeinheit K simulieren. Hierfür verwendet der Prozessor P Daten über gewünschte Fehler, die ihm von einer Fehlereinspeisungsschnittstelle übermittelt wurden. Unter Verwendung dieser Daten von der Fehlereinspeisungsschnittstelle und den synthetischen Rohdaten der darzustellenden virtuellen Umgebung berechnet der Prozessor P dann die synthetische Bilddaten zur Anzeige auf der Bildausgabeeinheit M, die Fehler der Kameraeinheit K simulieren.

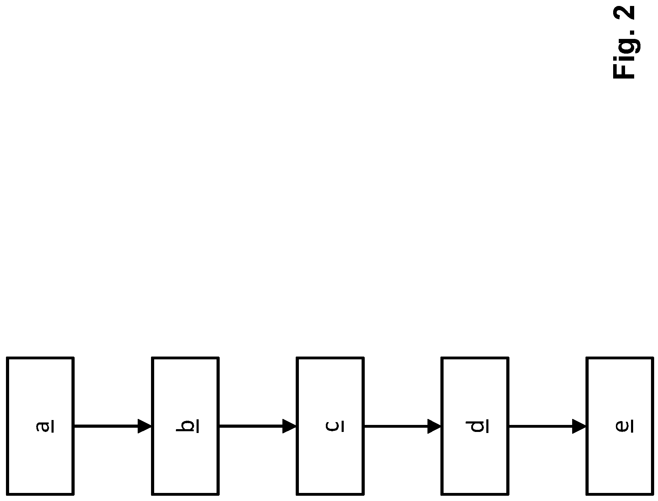

Fig. 2 zeigt beispielhaft ein Verfahren zum Testen des Steuergeräts ECU mit den Schritten:
a) Erzeugen von mittels der Kameraoptik erfassbaren synthetischen Bilddaten durch den Prozessor P,
b) Ausgeben der synthetischen Bilddaten auf der Bildausgabeeinheit M,
c) Erfassen der auf der Bildausgabeeinheit M ausgegebenen Bilddaten durch die Kameraoptik der Kameraeinheit K,
d) Ausgeben der Kamera-Bilddaten durch die Kameraeinheit K,
e) Empfangen der Kamera-Bilddaten durch das Steuergerät ECU.

Die synthetischen Bilddaten sind derart ausgestaltet, dass die von der Kameraeinheit K ausgegebenen Kamera-Bilddaten einen Fehler der Kameraeinheit K simulieren. In einem weiteren Schritt kann dann die Reaktion des Steuergerätes ECU auf den simulierten Fehler der Kameraeinheit K erfasst werden und an die übergeordnete Intelligenz 20 übermittelt werden.

Dies ermöglicht umfangreiche Tests des Steuergerätes ECU als Reaktion auf verschiedene Fehler der Kameraeinheit K. Insbesondere können gewünschte zu testende Fehler über die vorsehbare Fehlereinspeisungsschnittstelle des Prozessors P in den Prüfaufbau 10 eingespeist werden. In Abhängigkeit von dem eingespeisten gewünschten zu simulierenden Fehler kann der Prozessor P wiederum die synthetischen Bilddaten gezielt manipulieren, so dass die von der Kameraeinheit K ausgegebenen Kamera-Bilddaten so aussehen, als hätte die Kameraeinheit K den über die Fehlereinspeisungsschnittstelle in den Prüfaufbau eingespeisten Fehler. Die Fehlereinspeisung kann insbesondere über die Kommunikationsschnittstelle COM erfolgen. Es können Testfälle z. B. anhand eines Testkataloges ausgewählt und eingespeist werden. Die Reaktion des Steuergerätes ECU kann erfasst und ausgewertet werden. Der Testkatalog ist bevorzugt in einer Datenbank abgelegt, die Bestandteil des Prüfstandes 100 sein kann und die ebenfalls über die Kommunikationsschnittstelle COM an den Prüfaufbau 10 angebunden sein kann. Bevorzugt steuert die übergeordnete Intelligenz 20 den Testablauf. Beispielsweise kann die übergeordnete Intelligenz 20 auch direkten Zugriff auf die Datenbank mit den Testfällen haben und/oder über eine direkte Datenverbindung an die Datenbank angebunden sein.

Hierdurch wird es möglich, die Testsimulation wiederverwendbar auszugestalten und z. B. für verschiedene Prüfstände mit anderen Steuergeräten ECU wiederzuverwenden. Die Testfälle für die die Simulation der Kameraeinheit können wiederverwendet werden. Es ist ebenfalls möglich, den Prüfstand zu erweitern und mehrere Steuergeräte, auch im Regelverbund, gleichzeitig zu testen.

Durch die Verwendung einer solchen übergeordneten Testsimulation ist es auch möglich, die gleichen Testszenarien auf HiL, SiL etc. anzuwenden, welche entweder mit realen Sensoren, wie vorstehend beschrieben mit einer realen Kameraeinheit K, und/oder mit virtuellen, also simulierten Sensoren, arbeiten können.

### Bezugszeichenliste

- 10: Prüfaufbau
- 20: übergeordnete Intelligenz
- 100: Prüfstand
- COM: Kommunikationsschnittstelle
- ECU: Steuergerät
- K: Kameraeinheit
- M: Bildausgabeeinheit
- P: Prozessor
- a, b, c, d, e: Verfahrensschritte

## Patentansprüche

1. Prüfstand, aufweisend einen Prüfaufbau (10) zum Testen eines Steuergeräts (ECU), sowie das Steuergerät (ECU) und eine Kameraeinheit (K), wobei das Steuergerät (ECU) eingerichtet ist, von der Kameraeinheit (K) ausgegebene Kamera-Bilddaten zu empfangen, wobei der Prüfaufbau (10) einen Prozessor (P) und eine Bildausgabeeinheit (M) aufweist, wobei der Prozessor (P) eingerichtet ist, synthetische Bilddaten zu erzeugen und in Form eines mittels einer Kameraoptik erfassbaren Bildes auf der Bildausgabeeinheit (M) auszugeben, wobei die Kameraeinheit (K) so ausgebildet und angeordnet ist, die auf der Bildausgabeeinheit (M) ausgegebenen Bilddaten mittels der Kameraoptik zu erfassen, und der Prozessor (P) eingerichtet ist, die auf der Bildausgabeeinheit (M) ausgegebenen synthetischen Bilddaten derart zu manipulieren, dass die von der Kameraeinheit (K) ausgegebenen Kamera-Bilddaten einen Fehler der Kameraeinheit (K) simulieren, wobei der Fehler ein elektrischer Fehler der Kameraeinheit (K) ist.

2. Prüfstand nach Anspruch 1, wobei die Kameraeinheit (K) die Kameraoptik mit einer Linse und einem Kamerachip aufweist, wobei der Kamerachip als Ausgabedaten Rohdaten als digitale Bilddaten erzeugt, und wobei die von der Kameraeinheit (K) ausgegebenen Kamera-Bilddaten vom Kamerachip ausgegebene Rohdaten aufweisen.

3. Prüfstand nach Anspruch 1, wobei die Kameraeinheit (K) die Kameraoptik mit einer Linse und einem Kamerachip aufweist, wobei der Kamerachip als Ausgabedaten Rohdaten als digitale Bilddaten erzeugt, wobei die Kameraeinheit (K) einen Kamera-Prozessor zur Verarbeitung der vom Kamerachip ausgegebenen Rohdaten aufweist, wobei die von der Kameraeinheit (K) ausgegebenen Kamera-Bilddaten vom Kamera-Prozessor ausgegebene verarbeitete Daten aufweisen.

4. Prüfstand nach einem der vorhergehenden Ansprüche, wobei der Fehler den Ausfall zumindest eines Farbkanals betrifft.

5. Prüfstand nach einem der Ansprüche 2 bis 3, wobei der Fehler einen Fehler zumindest eines Pixels des Kamerachips betrifft.

6. Prüfstand nach Anspruch 5, wobei die Auflösung der Bildausgabeeinheit (M) größer ist als die des Kamerachips.

7. Prüfstand nach einem der vorhergehenden Ansprüche, wobei der Fehler zumindest einen Linsenfehler betrifft.

8. Prüfstand nach einem der vorhergehenden Ansprüche, wobei die vorgegebenen Fehler in einer Datenbank abgelegt sind, mit der der Prozessor über eine Kommunikationsschnittstelle (COM) verbunden ist.

9. Prüfstand nach einem der vorhergehenden Ansprüche, wobei eine übergeordnete Intelligenz (20) vorgesehen ist, die die Simulation der Fehler steuert.

10. Verfahren zum Testen eines Steuergeräts (ECU) mit den Schritten:
a) Erzeugen von mittels einer Kameraoptik erfassbaren synthetischen Bilddaten, von einem Prozessor
b) Ausgeben der synthetischen Bilddaten auf einer Bildausgabeeinheit (M) von dem Prozessor,
c) Erfassen der auf der Bildausgabeeinheit (M) ausgegebenen Bilddaten durch die Kameraoptik einer Kameraeinheit (K),
d) Ausgeben von Kamera-Bilddaten durch die Kameraeinheit (K),
e) Empfangen der Kamera-Bilddaten durch das Steuergerät (ECU),
f) Manipulieren der auf der Bildausgabeeinheit ausgegebenen synthetischen Bilddaten von dem Prozessor derart, dass die von der Kameraeinheit (K) ausgegebenen Kamera-Bilddaten einen Fehler der Kameraeinheit (K) simulieren, wobei der Fehler einen elektrischen Fehler der Kameraeinheit (K) betrifft.

11. Verfahren nach Anspruch 10, wobei die Reaktion des Steuergerätes (ECU) auf den simulierten Fehler der Kameraeinheit (K) erfasst wird und an eine übergeordnete Intelligenz (20) übermittelt wird.

## Claims

1. A test stand, comprising a test setup (10) for testing a control unit (ECU), as well as the control unit (ECU) and a camera unit (K), wherein the control unit (ECU) is configured to receive camera image data output by the camera unit (K), wherein the test setup (10) comprises a processor (P) and an image output unit (M), wherein the processor (P) is configured to generate synthetic image data and to output said data on the image output unit (M) in the form of an image able to be captured by means of camera optics, wherein the camera unit (K) is implemented and configured to capture the image data output on the image output unit (M) by means of the camera optics, and the processor (P) is configured to manipulate the synthetic image data output on the image output unit (M) in such a way that the camera image data output by the camera unit (K) simulates a fault of the camera unit (K), wherein the fault is an electrical fault of the camera unit (K).

2. The test stand according to claim 1, wherein the camera unit (K) comprises the camera optics having a lens and a camera chip, wherein the camera chip generates as output data raw data as digital image data, and wherein the camera image data output by the camera unit (K) comprises raw data output by the camera chip.

3. The test stand according to claim 1, wherein the camera unit (K) comprises the camera optics having a lens and a camera chip, wherein the camera chip generates as output data raw data as digital image data, wherein the camera unit (K) comprises a camera processor for processing the raw data output by the camera chip, wherein the camera image data output by the camera unit (K) comprises processed data output by the camera processor.

4. The test stand according to any one of the preceding claims, wherein the fault relates to the failure of at least one color channel.

5. The test stand according to any one of claims 2 to 3, wherein the fault relates to a fault of at least one pixel of the camera chip.

6. The test stand according to claim 5, wherein the resolution of the image output unit (M) is greater than that of the camera chip.

7. The test stand according to any one of the preceding claims, wherein the fault relates to at least one lens fault.

8. The test stand according to any one of the preceding claims, wherein the specified faults are stored in a database to which the processor is connected via a communication interface (COM).

9. The test stand according to any one of the preceding claims, wherein a higher-level intelligence (20) is provided which controls the simulation of the faults.

10. A method for testing a control unit (ECU), having the steps of:
a) generating synthetic image data, able to be captured by means of camera optics, by a processor
b) outputting the synthetic image data on an image output unit (M) by the processor,
c) capturing the image data output on the image output unit (M) by the camera optics of a camera unit (K),
d) outputting camera image data by the camera unit (K),
e) receiving the camera image data by the control unit (ECU),
f) manipulating the synthetic image data output on the image output unit by the processor in such a way that the camera image data output by the camera unit (K) simulates a fault of the camera unit (K), wherein the fault relates to an electrical fault of the camera unit (K).

11. The method according to claim 10, wherein the reaction of the control unit (ECU) to the simulated fault of the camera unit (K) is detected and transmitted to a higher-level intelligence (20).

## Revendications

1. Banc d'essai, comportant un assemblage d'essai (10) destiné à tester un appareil de commande (ECU), ainsi que l'appareil de commande (ECU) et une unité de caméra (K), l'appareil de commande (ECU) étant conçu pour recevoir des données d'images de caméra délivrées par l'unité de caméra (K), l'assemblage d'essai (10) comportant un processeur (P) et une unité de sortie d'images (M), le processeur (P) étant conçu pour générer des données d'images synthétiques et les délivrer sur l'unité de sortie d'images (M) sous forme d'une image détectable au moyen d'une optique de caméra, l'unité de caméra (K) étant réalisée sous une forme et disposée de manière à détecter, au moyen de l'optique de caméra, les données d'images délivrées sur l'unité de sortie d'images (M), et le processeur (P) étant conçu pour manipuler les données d'images synthétiques délivrées sur l'unité de sortie d'images (M) de telle sorte que les données d'images de caméra délivrées par l'unité de caméra (K) simulent un défaut de l'unité de caméra (K), le défaut étant un défaut électrique de l'unité de caméra (K).

2. Banc d'essai selon la revendication 1, l'unité de caméra (K) comportant l'optique de caméra avec une lentille et une puce de caméra, la puce de caméra générant en tant que données de sortie des données brutes sous forme de données d'images numériques, et les données d'images de caméra délivrées par l'unité de caméra (K) comprenant des données brutes délivrées par la puce de caméra.

3. Banc d'essai selon la revendication 1, l'unité de caméra (K) comportant l'optique de caméra avec une lentille et une puce de caméra, la puce de caméra générant en tant que données de sortie des données brutes sous forme de données d'images numériques, l'unité de caméra (K) comportant un processeur de caméra destiné à traiter les données brutes délivrées par la puce de caméra, les données d'images de caméra délivrées par l'unité de caméra (K) comprenant des données traitées délivrées par le processeur de caméra.

4. Banc d'essai selon l'une des revendications précédentes, le défaut concernant la défaillance d'au moins un canal de couleurs.

5. Banc d'essai selon l'une des revendications 2 à 3, le défaut concernant un défaut d'au moins un pixel de la puce de caméra.

6. Banc d'essai selon la revendication 5, la résolution de l'unité de sortie d'images (M) étant supérieure à celle de la puce de caméra.

7. Banc d'essai selon l'une des revendications précédentes, le défaut concernant au moins un défaut de lentille.

8. Banc d'essai selon l'une des revendications précédentes, les défauts prédéfinis étant stockés dans une base de données avec laquelle le processeur est connecté via une interface de communication (COM).

9. Banc d'essai selon l'une des revendications précédentes, une intelligence de niveau supérieur (20) étant prévue, qui commande la simulation des défauts.

10. Procédé d'essai d'un appareil de commande (ECU), comprenant les étapes suivantes:
a) génération, par un processeur, de données d'images synthétiques pouvant être détectées au moyen d'une optique de caméra,
b) délivrance, par le processeur, des données d'images synthétiques sur une unité de sortie d'images (M),
c) détection, par l'optique de caméra d'une unité de caméra (K), des données d'images délivrées sur l'unité de sortie d'images (M),
d) délivrance, par l'unité de caméra (K), de données d'images de caméra,
e) réception des données d'images de caméra par l'appareil de commande (ECU),
f) manipulation des données d'images synthétiques délivrées sur l'unité de sortie d'images par le processeur de telle sorte que les données d'images de caméra délivrées par l'unité de caméra (K) simulent un défaut de l'unité de caméra (K), le défaut concernant un défaut électrique de l'unité de caméra (K).

11. Procédé selon la revendication 10, la réaction de l'appareil de commande (ECU) au défaut simulé de l'unité de caméra (K) étant détectée et transmise à une intelligence de niveau supérieur (20).
